# EUROPEAN PATENT APPLICATION

(11) **EP 1 302 869 A1**
(43) Date of publication of application: **16.04.2003**
(21) Application number: 02252431.8
(22) Date of filing: 03.04.2002
(51) Int. Cl.: G06F 17/30

(54) **Location-based services provision**

(30) Priority: 09.10.2001 US 973412
(71) Applicant: Nortel Networks Limited, St. Laurent, Quebec H4S 2A9 (CA)
(72) Inventor: Brescia, Paul T., Morrisville, North Carolina 27560 (US)
(74) Representative: Ertl, Nicholas Justin

(57) **Abstract**

The present invention provides for the selection of an address, such as a URL, for content based on a user's location. For services that either provide unique content for different entities or areas or provide common content from different locations, an application process is capable of identifying an address for a content server (34) based on the location of a user's mobile terminal (20,22,24,26). Once the URL is selected, the application process will deliver the URL to the mobile terminal to request content. Alternatively, the application process may redirect content delivery to the mobile terminal based on the URL.

## Description

### Field of the Invention

The present invention relates to providing information, and in particular to providing address indicia for content in light of location criteria.

### Background of the Invention

Many Internet services are configured to provide information tailored for various locations, services, entities, events, and the like. The information is stored in various locations on the Internet in association with an address, which is typically referred to as a uniform resource locator (URL). Location based content is particularly beneficial for mobile devices having Internet access.
Unfortunately, URLs for the various content locations are often inconsistent and difficult to remember, and the limited interface and display capability on many mobile devices makes entry and selection of the appropriate URL cumbersome.

For example, a popular information service is provided by citysearch.com, which provides entertainment information, tailored to many cities. However, travelers will typically have to navigate through several web pages or enter detailed search criteria to find the location or URL for content for a specific city, because the URLs for the various cities are inconsistent. The following citysearch.com URLs for select urban areas demonstrates these inconsistencies:
Raleigh/Durham, NC - triangle.citysearch.com
San Francisco, CA - bayarea.citysearch.com
Dallas/Fort Worth, TX - guidelive.com
San Diego, CA - cityseach.signonsandieg.com
St. Paul, MN - twincities.citysearch.com

Further, many content providers provide the same content from different content servers in disparate locations. Unfortunately, the request for content typically controls selection of the content server. As such, if most users have an address for one content server, alternate content servers may have plenty of capacity even when one content server is overloaded. For example, if two content servers located in different time zones provide the same news, one content server may see heavy traffic as the workday begins while the other in relatively inactive. Preferably, both servers could share the load during peak traffic. Similarly, it is often preferable for a user traveling from one time zone to another to access content from the most proximate content server. However, there is currently no efficient way to control content deliver based on user location.

In essence, there are numerous services that provide content that is either tailored to or should be based on the location of a user. With the current encumbrances in accessing content via mobile terminals and the need to manage content delivery, there is a need for a way to automatically select addresses for content based on a user's location.

### Summary of the Invention

The present invention provides for the selection of an address, such as a UKL, for content based on a user's location. For services that either provide unique content for different entities or areas or provide common content from different locations, an application process is capable of identifying an address for a content server based on the location of a user's mobile terminal. Once the URL is selected, the application process will deliver the URL to the mobile terminal to request content. Alternatively, the application process may redirect content delivery to the mobile terminal based on the URL.

The application process may derive location indicia corresponding to the mobile terminal directly or indirectly from any number of sources, including global positioning system (GPS) devices, an electronic mobile location center (EMLC), home or visitor location registers within a mobile network, or mobile terminals themselves. The location indicia may be determined on a periodic basis or upon the triggering of an event, and may relate to a specific location, an area, or proximity between the user and a location or area.

The present invention is capable of delivering information to any number of mobile terminals, which are typically serviced by a circuit-switched network. These devices may include, but are not limited to, computers, mobile terminals, such as personal digital assistants (PDAs), mobile telephones, and the like. In addition to devices serviced by circuit-switched networks, wireless packet-switched terminals, such as properly configured mobile telephones, may communicate with a traditional packet-switched network via wireless packet-switched networks. In the latter case, information is communicated between the wireless packet-switched terminal and mobile terminals on the packet-switched network without conversion to a circuit-switched format, such as the traditional time-division multiplexing (TDM).

Those skilled in the art will appreciate the scope of the present invention and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the invention, and together with the description serve to explain the principles of the invention.

FIGURE 1 is an illustration representing a communication environment according to one embodiment of the present invention.

FIGURE 2 is a block representation of an application server according to one embodiment of the present invention.

FIGURE 3 is a block representation of an audio browser configured according to one embodiment of the present invention.

FIGURE 4 is a communication flow diagram for a first illustrative example of the operation of the present invention.

FIGURE 5 is a communication flow diagram for a second illustrative example of the operation of the present invention.

### Detailed Description of the Preferred Embodiments

The present invention provides for the selection of an address for content based on a user's location. For services that either provide unique content for different entities or areas or provide common content from different locations, an application process is capable of identifying an address for a content server based on the location of a user's mobile terminal. Once. the address is selected, the application process will deliver the address to the mobile terminal to request content. Alternatively, the. application process may redirect content delivery to the mobile terminal based on the URL.

The embodiments set forth below represent the necessary information to enable those skilled in the art to practice the invention and illustrate the best mode of practicing the invention. Upon reading the following description in light of the accompanying drawing figures, those skilled in the art will understand the concepts of the invention and will recognize applications of these concepts not particularly addressed herein. It should be understood that these concepts and applications fall within the scope of the disclosure and the accompanying claims.

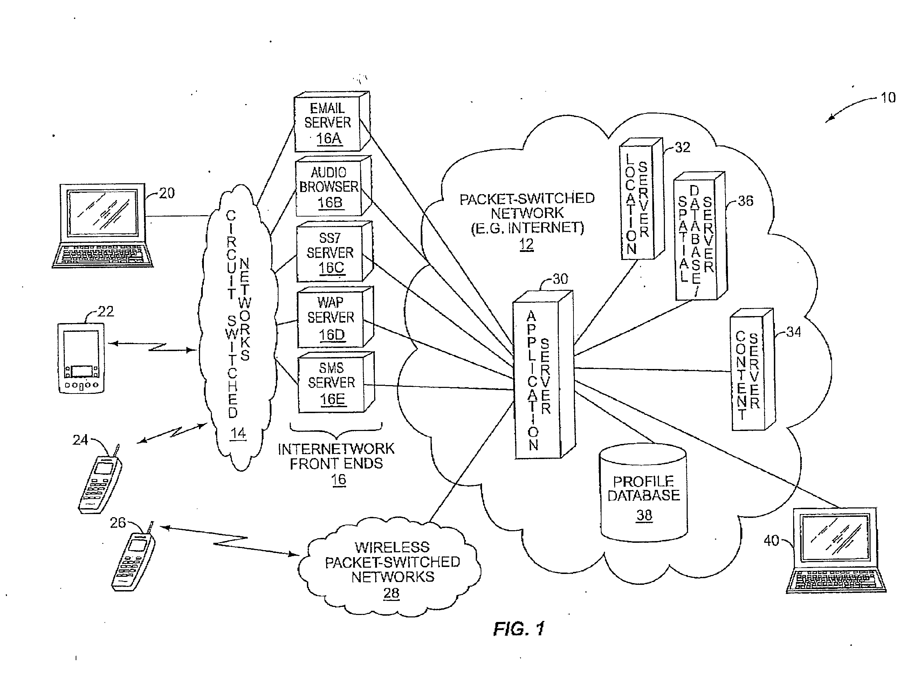

A communication environment 10 is illustrated in Figure 1 to include a packet-switched network 12, such as the Internet, and circuit-switched networks 14, cooperating with one another via various internetwork front ends 16 to facilitate communications between the networks and various devices connected thereto. Those skilled in the art will recognize that the packet-switched network 12 may include numerous networks connected to each other via hubs, routers, and switches to facilitate packet-switched communications. Further, the circuit-switched networks 14 will typically include the Public Switched Telephone Network (PSTN) and a wireless circuit-switched network to facilitate traditional mobile communications.

The internetwork front ends is represent various devices capable of facilitating communications, and in particular, providing information, generally referred to as content, to circuit-switched devices served by the circuit-switched networks 14. The internetwork front ends 16 may include, but are not limited to, email servers 16A, audio browsers 16B, signaling system seven (SS7) devices or servers 16C, wireless application protocol (WAP) servers 16D, and short message service (SMS) servers 16E. Each of these devices is configured to receive information from a packet-switched device on the packet-switched network 12 and deliver information capable of being received and processed, directly or through intermediate devices, to circuit-switched devices on the circuit-switched networks 14. The information will typically be or include an address for content or actual content provided by a device with a selected address. The address is usually a uniform resource locator (URL) along or associated with a port number. Those skilled in the art will recognize the various ways to address and deliver content.

The email server 16A is capable of sending email to devices receiving email via the circuit-switched networks 14. Similarly, the SS7, WAP, and SMS servers 16C-16E are capable of sending instructions, WAP messages, and SMS messages to corresponding devices served by the circuit-switched networks 14. As will be described in further detail below, the audio browser 16B is configured to provide an audio interface via the circuit-switched network 14 and a corresponding packet-switched interface to devices in the packet-switched network 12.

Based on select criteria, the present invention is capable of delivering an address or content associated with an address to any number of mobile terminals, which are typically serviced by a circuit-switched network 14. These mobile terminals may include, but are not limited to, computers 20, circuit-switched mobile terminals, such as personal digital assistants (PDAs) 22, mobile telephones 24, and the like. In addition to devices serviced by circuit-switched networks 14, wireless packet-switched mobile terminals 26, such as packet-switched mobile telephones, may communicate with a traditional packet-switched network 12 via wireless packet-switched networks 28. In the latter case, information is communicated between the wireless packet-switched device 26 and devices on the packet-switched network 12 without conversion to a circuit-switched format, such as the traditional time-division multiplexing (TDM).

In one embodiment of the present invention, an application server 30 residing in the packet-switched network 12 runs a process implementing a content delivery service capable of determining a preferred address *from* which to request content for delivery to a mobile terminal. As discussed in detail below, a profile usually identifies the service and selection of the address is typically based on the location of the mobile terminal. For the purpose of conciseness and readability, an address is hereafter referred to as a URL.

The application server 30 may access location information from a variety of sources, including a location server 32, which may run a process capable of receiving or determining location information in a variety of ways. Although the location process may run on the application server 30, a separate service provider may be used to provide a location service. Location information may be derived from any number of sources, including global positioning system (GPS) devices, an electronic mobile location center (EMLC), home or visitor location registers within a mobile network, or mobile terminals themselves.

A location process is used to identify the location of a defined entity. The location may be determined on a periodic basis or upon the triggering of an event that may or may not be associated with the location of the mobile terminal. Those skilled in the art will recognize the numerous location determining techniques capable of being used with the present invention.

A content server 34 may be used to provide content to the mobile terminal based on a request directed to the URL and initiated from the mobile terminal, the application server 30, or like entity. The content may include any type of information desired by a user or service provider. The application server 30 may be configured to provide content in addition to or in lieu of that provided by the content server 34.

A spatial database or server 36 is configured to provide a URL for a particular service based on location information, which may include coordinates, proximities, or areas. For a given service capable of providing the same or unique content from different addresses, the spatial database or server 36 will select a particular URL from which to request content based on the location of the mobile terminal, and perhaps other selection criteria.

Service providers may provide unique content for different locales. The content for the various locales may reside at one or many locations; however, the content is typically uniquely addressed. For the present description, assume unique content is uniquely addressed, regardless of whether the content is provided by one or more content servers 34 at the same or different location. Further, service providers may provide the same content from different locations to distribute communication loads. As such, the same content may be associated with unique addresses corresponding to content servers 34 at different locations.

Customized profiles for a user, service provider, or both may be configured via the application server 30 and stored in a profile database 38 that is integrated with or separate from the application server 30. A user or service provider may log in to the application server 30 through any number of devices, including personal computer 40, to create a profile. Each profile will typically identify services capable of delivering content associated with various URLs based on location of a mobile terminal or other criteria provided by the user, service provider, or a combination thereof.

The profile may also define a delivery medium for delivering information, which may be or may include a URL, to a select mobile terminal. The information may be provided to the mobile terminal in any number of ways, including an email, telephone call, a WAP push, an SMS message, an SS7 message, or any other suitable communication medium through which the application server 30 can effect delivery of information. Another alternative would be a simple packet-switched message to a device capable of interacting with a wireless packet-switched network 28. As such, virtually any information medium is applicable.

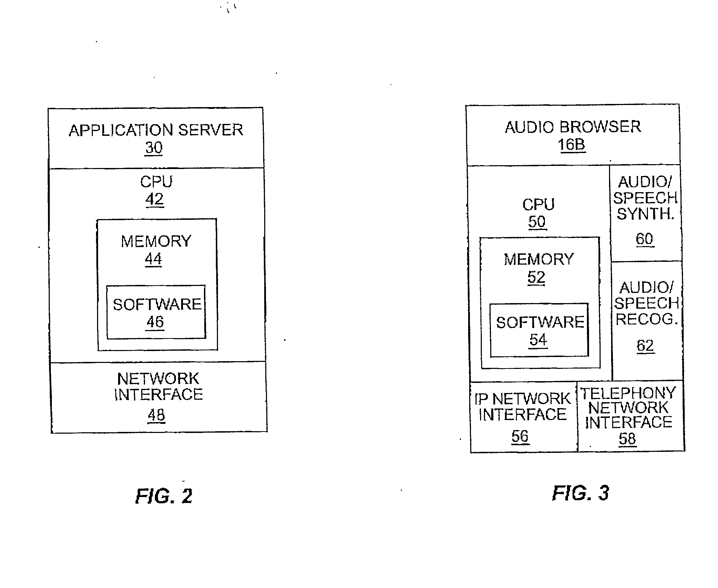

Many of these delivery mediums will simply incorporate a server or server process capable of interacting with the corresponding gateway or like device capable of translating the packet-switched message into a message capable of being transmitted over a circuit-switched network and on to a mobile terminal through the PSTN or wireless network in a text-based format. These servers, like the application server 30 illustrated in Figure 2, will typically include a central processing unit (CPU) 42 having sufficient memory 44 containing the requisite software 46 for operation. The CPU 42 is associated with a network interface 48 to facilitate packet-switched communications with the various devices within and connected to the packet-switched network 12.

Audible content may be sent over circuit-switched networks 14 using the audio browser 16B, which is illustrated in Figure 3. In general, the application server 30 and audio browser 16B preferably operate in a client-server configuration using an audio- or voice-capable markup language. The audio browser 16B will interpret the markup language content representing the audio message to send to a telephony user and deliver the corresponding audio to the telephony user. If applicable, audio from the telephony user is likewise converted to content for delivery to the application server 30. The messages sent to the telephony user from the audio browser 16B may be pre-recorded, may be generated in real-time based on text-to-speech. conversion, or may be a combination thereof.

The voice extensible markup language (VoiceXML) is the preferred markup language for interaction between the audio browser 16B and the application server 30. VoiceXML is an XML document schema developed by the VoiceXML Forum, a group of organizations founded by AT&T, IBM, Lucent Technologies, and Motorola. VoiceXML facilitate web-generated interactions through audio, either pre-recorded or translated from text to speech, and through voice, using speech recognition. Additional information on VoiceXML may be obtained from Motorola, Inc., 1303 East Algonquin Road, Schaumburg, Illinois, 60196, or from the VoiceXML Forum, which has a web site at http://www.voicexml.org.

The audio browser 16B, which may be referred to as a voice browser, is analogous to traditional, graphical browsers using HTML. The W3C working draft for "An Introduction and Glossary for the Requirement Draft - Voice Browsers," 23 December 1999, provides additional information on voice browsers, and is incorporated herein by reference in its entirety.

As such, the audio browser 16B is the liaison between the circuit-switched networks 14 and the application server 30 of the packet-switched network 12, and operates according to a call dialog established by the markup language. The call dialog is preferably provided to the audio browser 16B in a VoiceXML web page created by the application server 30. The call dialog will preferably include the necessary information to interact with the telephony user, and optionally, establish calls to and originated by the telephony user, as well as report the status of the call or the caller's response.

The application server 30 may generate the necessary call dialog in a VoiceXML page and provide the page to the audio browser 16B. The audio browser 16B will execute the call dialog to control communications with the telephony user via a mobile terminal, such as a mobile terminal, as well as deliver audio to the mobile terminal corresponding to the information and/or content to deliver to the user or mobile terminal. The call dialog provided in the form of a VoiceXML page to the audio browser 16B provides the audio browser 16B with sufficient instructions to carry out its tranalational duties and control communications with the mobile terminal to facilitate information delivery as described herein.

Thus, the audio browser 16B provides text converted from audio to the application server 30 in the form of requests for web pages, and the responding web pages may include the text to convert and send to the user's device in an audible format. The VoiceXML pages will also include sufficient instructions to have the audio browser 16B convert incoming audio and request subsequent pages to facilitate ongoing communications as desired. The call dialog provided in the VoiceXML pages may facilitate numerous iterations, instructions, and commands to effectively control the audio browser 16B and the connection with the user's device.

An audio browser 16B, which will typically include a CPU 50 associated with memory 52 and the requisite software 54 to control operation. The CPU 50 is also associated with an IP network interface 56 for communicating with network devices, such as the application server 30. A telephony network interface 58 is provided for interaction with the circuit-switched networks 14, and in particular, a local exchange or mobile switching center, to facilitate circuit-switched communications. The telephony network interface 58 preferably supports a primary rate interface (PRI), T1, or like interface, to allow the audio browser 16B to directly communicate with telephony devices, such as a mobile terminal, via direct or wireless switching systems.

In order to recognize and inject audio, such as tones and speech, the audio browser 16B is preferably configured with an audio or speech synthesizer 60 and audio or speech recognition software/hardware 62. The speech synthesizer 60 is used to generate audio instructions and messages for the user. Notably, the audio browser 16B may use pre-recorded audio to provide messages to the called party based on instructions from the application server 30, or may convert textual content to speech. The speech recognition software/hardware 62 is configured to recognize speech of the user during a communication session, or to recognize tones, such as those generated from key presses of a telephony device, such as a mobile terminal. As noted above, the audio browser 16B preferably uses VoiceXML as a liaison between audio or speech, both spoken and recognized, and the data representing the speech that is sent to and from the application server 30. The audio browser 16B may include server processes in addition to the normal client processes of a traditional browser to facilitate communications with the user.

In operation, the server process on application server 30 identifies a service having either location specific content or content capable of being delivered from different URLs. The server process will gather location indicia bearing on the location of the mobile terminal directly or through the location server 32 and determine a specific URL from which content should be requested. Typically, the server process will provide the location indicia for the mobile terminal via the spatial database or server 36, which will identify and return a URL from which to request content. The server process may send the URL or content, such as a web page, including the URL to the mobile terminal. Alternatively, the server process may redirect content delivery to the mobile terminal using the returned URL. The URL, content with URL, or content from the redirection may be sent to the mobile terminal via an appropriate internetwork front end 16 or via the wireless packet-switched networks 28. If additional content is necessary, the content server 34 may be accessed to gather additional information to provide to the user via the defined medium. The content may be sent to the mobile terminal in the form of a response to a request, or may be pushed to the mobile terminal in traditional fashion,

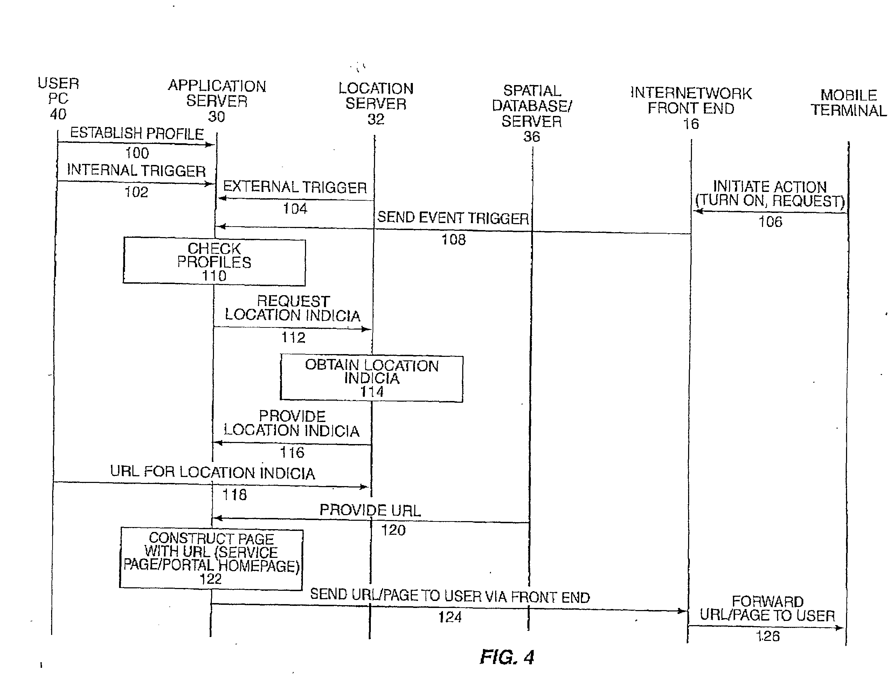

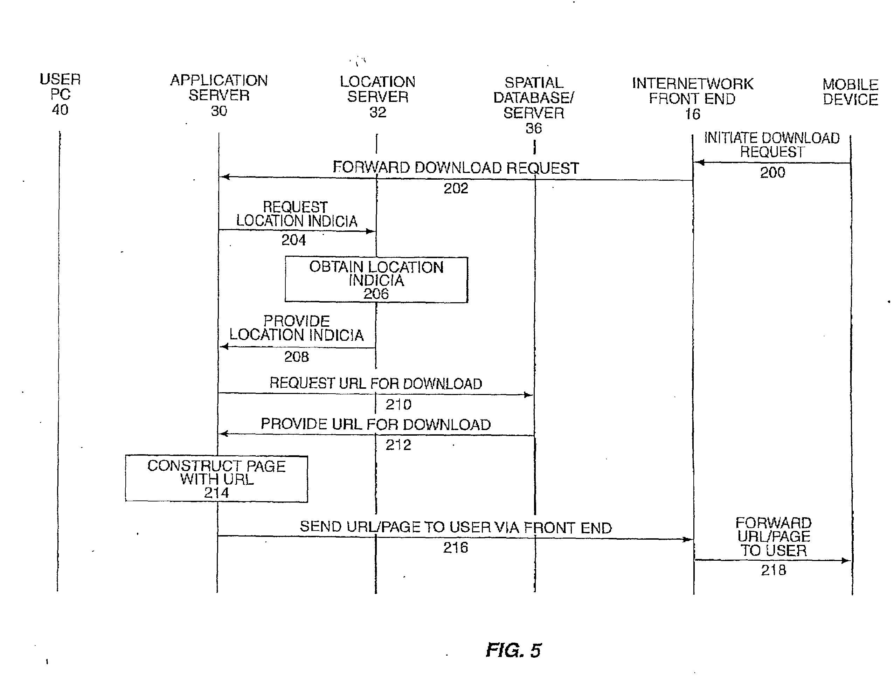

Figures 4 and 5 provide exemplary call flows for the above-described scenarios. The first call flow embodiment illustrated in Figure 4 begins with a user establishing a profile via the application server 30 using personal computer 40 (step 100). As discussed, the profile may be stored in a profile database 38 and will define services capable of delivering content from multiple URLs. As such, the application server 30 will preferably run an application process, which waits for the receipt of an event trigger. The event trigger may originate from an internal process (step 102), an external process or device (step 104) or via the mobile terminal. For the latter, the mobile terminal may automatically send a trigger or send a trigger in response to user input. In either scenario, the mobile terminal will initiate an action by sending appropriate instructions to the servicing front end 16(step 106), which will forward an event trigger to the application vprocess on the application server 30. The mobile terminal or network may be configured to periodically initiate an action for an event trigger or initiate the action upon activating the mobile terminal.

At some point, an event trigger will activate the application process for the mobile terminal. The application process will check existing profiles to identify a service defined by one or more profiles based on the identity of the mobile terminal and user thereof (step 110). Each service may have various content depending on location. Upon identifying the service, the application process will request location indicia defined by the respective profiles from the location server 32 or other device, including the mobile terminal, to gather location indicia (step 112). In response to the request, the location server 32 or other device, as applicable, will determine the relative location of the mobile terminal (step 114) and provide the location indicia corresponding to the location to the application process (step 116).

The application process will then determine a URL from which to request content based on the location indicia for the mobile terminal. In one embodiment, the application process will send a request containing the location indicia to the spatial database or server 36 (step 118), which will identify and return the URL corresponding to the location indicia to the application process (step 120). The application process may then construct a page containing the URL (step 122) and deliver the page to the mobile terminal via the internetwork front end 16 (steps 124 and 126). Alternatively, the application process may deliver the URL to the mobile terminal directly without constructing a page or redirect content delivery to the mobile terminal from a source identified with the URL. Typically, the user may use the browser of the mobile terminal to request content with the URL provided by the application process in traditional fashion.

As noted, profiles and services may be user or provider centric. For a user centric embodiment, the user or the user's mobile terminal initiates an action, which results in a request for a web page for the mobile terminal's browser to the application process. The application process accesses the user's profile, which identifies a service subscribed to by the user. The service is a proximity based service having various links corresponding to content for different entities, such as government offices, clubs, restaurants or the like.

The application process next requests location indicia for the mobile terminal and subsequently requests a URL based on the location of the mobile terminal. The URL request may identify the service, if the spatial database or server 36 supports multiple services. Alternatively, the spatial database or server 36 may be dedicated to one service where the service is inherent and the request need not identify the service. Upon receipt of the URL, the application process builds the URL into the web page and delivers the web page to the mobile terminal. The mobile terminal may receive and display the web page using a browser.

For a service centric embodiment, an application process for a service, such as a travel service, may periodically check a subscriber's profile for service preferences related to hotel, restaurants, and the like. If the application process determines that content should be delivered based on location, the application process will request location indicia for the mobile terminal and subsequently request a URL based on the location of the mobile terminal. The URL request may identify the service, if the spatial database or server 36 supports multiple services. Alternatively, the spatial database or server 36 may be dedicated to one service where the service is inherent and the request need not identify the service.

Upon receipt of the URL, the application process builds the URL into a web page and pushes or otherwise delivers the web page to the mobile terminal. The mobile terminal will receive and display the web page using a browser. In either of the above scenarios, the user of the mobile terminal may use the browser to request content using the URL.

The application process may also be configured to select delivery of particular content based on the location of the mobile terminal. An example communication flow is illustrated in Figure 5. Initially, a request for content from a mobile terminal (step 200) is sent to a servicing internetwork front end 16, which forwards the request to the application process of the application sever 30 (step 202).

The application process will recognize the request as requesting content available from multiple download sites, each having unique URLs. Upon recognizing the availability of multiple download sites, the application process will request location indicia defined by the respective profiles from the location server 32 or other device, including the mobile terminal, to gather location indicia (step 204). In response to the request, the location server 32 or other device, as applicable, will determine the location of the mobile terminal (step 206) and provide the location indicia to the application process (step 208).

The application process will then determine a URL from which to request content based on the location indicia for the mobile terminal. In one embodiment, the application process will send a request containing the location indicia to the spatial database or server 36 (step 210), which will identify and return the URL corresponding to the location indicia to the application process (step 212). The application process may then construct a page containing the URL (step 214) and deliver the page to the mobile terminal via the internetwork front end 16 (steps 216 and 218). Alternatively, the application process may deliver the URL to the mobile terminal directly without constructing a page or redirect content delivery to the mobile terminal from a source identified with the URL. Again, the user may use the browser of the mobile terminal to request content from a specific location using the URL provided by the application process in traditional fashion.

Those skilled in the art will recognize improvements and modifications to the preferred embodiments of the present invention. All such improvements and modifications are considered within the scope of the concepts disclosed herein and the claims that follow.

## Claims

1. A method for selecting an address for content based on location, the method comprising:
a. determining a location of a mobile terminal; and
b. identifying a plurality of addresses for content based on the location of the mobile terminal wherein each of the plurality of addresses correlates to a unique location.

2. The method of claim 1 wherein unique content is associated with each of the plurality of addresses.

3. The method of claim 1 wherein the same content is associated with each of the plurality of addresses.

4. The method of claim 1, 2 or 3 further comprising effecting delivery of the address to the mobile terminal to allow the mobile terminal to request content using the address.

5. The method of claim 4 wherein the address is delivered to the mobile terminal via one of the group consisting of email, short message service (SMS), system signaling seven (SS7) message, and web page.

6. The method of claim 1, 2 or 3 further comprising effecting delivery of content associated with the address to the mobile terminal.

7. The method of claim 1, 2 or 3 further comprising accessing the content with the address and effecting delivery of the content to the mobile terminal.

8. The method of any preceding claim further comprising receiving a trigger initiated by an action of the mobile terminal as a condition of determining the location of the mobile terminal.

9. The method of any of claims 1 to 7 further comprising receiving a trigger unrelated to an action of the mobile terminal as a condition of determining the location of the mobile terminal.

10. The method of claim 9 further comprising a service to generate the trigger.

11. The method of any preceding claim further comprising providing a profile of a user of the mobile terminal, and selecting a service associated with the content for each of the plurality of addresses based on the profile.

12. The method of any preceding claim further comprising providing a profile of a service provider, and selecting a service associated with the content for each of the plurality of addresses based on the profile.

13. The method of any preceding claim wherein the determining step further comprises accessing a location service to obtain location indicia corresponding to the location of the mobile terminal and using the location indicia for identifying the address.

14. The method of claim 13 wherein the identifying step uses the location indicia to access an address service using the location indicia to identify the address based on the location of the mobile terminal.

15. A computer program comprising computer program code means for implementing all the steps of any one of claims 1 to 14 when said program is run on a computer.

16. A computer program as claimed in claim 15 embodied on a computer readable medium.

17. An apparatus for selecting an address for content based on location comprising:
a. a network interface;
b. a control system associated with said interface and adapted to:
i. determine a location of a mobile terminal; and
ii. identify a plurality of addresses for content based on the location of the mobile terminal wherein each of the plurality of addresses correlates to a unique location.

18. The apparatus of claim 7 wherein unique content is associated with each of the plurality of addresses.

19. The apparatus of claim 7 wherein the same content is associated with each of the plurality of addresses.

20. The apparatus of claim 17, 18 or 19 wherein the control system is further adapted to effect delivery of the address to the mobile terminal to allow the mobile terminal to request content using the address.

21. The apparatus of claim 20 wherein the address is delivered to the mobile terminal via one of the group consisting of email, short message service (SMS), system signaling seven (SS7) message, and web page.

22. The apparatus of claim 17, 18 or 19 wherein the control system is further adapted to effect delivery of content associated with the address to the mobile terminal.

23. The apparatus of claim 17, 18 or 19 wherein the control system is further adapted to access the content with the address and effect delivery of the content to the mobile terminal.

24. The apparatus of any of claims 17 to 23 wherein the control system is further adapted to receive a trigger initiated by an action of the mobile terminal as a condition of determining the location of the mobile terminal.

25. The apparatus of any of claims 17 to 23 wherein the control system is further adapted to receive a trigger unrelated to an action of the mobile terminal as a condition of determining the location of the mobile terminal.

26. The apparatus of any of claims 17 to 25 wherein the control system is further adapted to provide a profile of a user of the mobile terminal, and select a service associated with the content for each of the plurality of addresses based on the profile.

27. The apparatus of any of claims 17 to 26 wherein the control system is further adapted to provide a profile of a service provider, and select a service associated with the content for each of the plurality of addresses based on the profile.

28. The apparatus of any of claims 17 to 27 wherein the control system is further adapted to access a location service to obtain location indicia corresponding to the location of the mobile terminal and use the location indicia for identifying the address.
